# EUROPÄISCHE PATENTANMELDUNG

(11) **EP 0 898 320 A2**
(43) Veröffentlichungstag der Anmeldung: **24.02.1999**
(21) Anmeldenummer: 98113258.2
(22) Anmeldetag: 16.07.1998
(51) Int. Cl.: H01M 8/02

(54) **Stromkollektor für eine Brennstoffzelle mit geschmolzenen Karbonaten und Verfahren zu seiner Herstellung**

(30) Priorität: 19.08.1997 DE 19735854
(71) Anmelder: DAIMLER-BENZ AKTIENGESELLSCHAFT, 70567 Stuttgart (DE)
(72) Erfinder: Nitschke, Felix, Dr., 81371 München (DE); Wind, Jörg, Dr., 85757 Karlsfeld (DE)

(57) **Zusammenfassung**

Die Stromkollektoren (6) an den Kathoden (2) einer Schmelzcarbonat-Brennstoffzelle aus gestapelten, durch Separatorplatten (8) voneinander getrennten Zelleneinheiten sind an wenigstens einer Seite mit einer Aluminiumbeschichtung (14) versehen.

## Beschreibung

Die Erfindung bezieht sich auf einen Stromkollektor aus Edelstahlblech, an den Kathoden einer Schmelzcarbonat-Brennstoffzelle (MCFC - Molten Carbonate Fuel Cell) nach dem Oberbegriff des Anspruchs 1. Sie hat auch ein Verfahren zur Herstellung des Stromkollektors zum Gegenstand.

Eine Schmelzcarbonat-Brennstoffzelle besteht im allgemeinen aus einem Stapel von Einzelzellen. Jede Einzelzelle weist eine Kathode und eine Anode mit ihren Stromkollektoren und eine mit dem Schmelzelektrolyten getränkte Matrix zwischen den den beiden Elektroden auf.

Als Elektrolyt wird ein schmelzflüssiges Alkalicarbonatgemisch verwendet. Die Betriebstemperatur liegt daher im Bereich von 500 bis 700°C. Als Alkalicarbonatgemische werden Lithium- und Kaliumcarbonatgemische, Lithium- und Natriumcarbonatgemische und eine ternäre Mischung aus Lithium-, Kalium- und Natriumcarbonat eingesetzt. Allen drei Gemischen ist gemeinsam, dass sie Lithiumcarbonat als einen wesentlichen Bestandteil enthalten.

Die Einzelzellen werden durch einen gasdichten Separator voneinander getrennt. Nach einer Variante besteht der Separator aus einer planen Platte, wobei der gasdurchlässige Kathodenstromkollektor zwischen der Kathode und der Separatorplatte und der Anodenstromkollektor zwischen der Anode und der Separatorplatte gewellt ausgebildet sind, um einen Gaszufuhrraum zur Zufuhr der Luft oder des sonstigen sauerstoffhaltigen Gases zur Kathode bzw. zur Zufuhr des Wasserstoffs und sonstigen Brenngases zur Anode zu bilden.

Bei einer anderen Variante sind die Stromkollektoren gewellt und gasdicht ausgebildet, so dass sie zugleich die Separatoren bilden.

Mit den Stromkollektoren wird also einerseits der elektrochemisch erzeugte Strom von der Kathode bzw. Anode abgeleitet, während sie andererseits Räume für die Gaszufuhr bilden.

Um die Kathode mechanisch zu verstärken, kann zwischen dem gewellten Kathodenstromkollektor oder der gewellten Separatorplatte und der Kathode zusätzlich ein gasdurchlässiges, elektrisch leitendes planes Stützblech vorgesehen sein. Das Stützblech kann z.B. als Lochblech ausgebildet sein.

Durch die Luftzufuhr und die hohe Temperatur ist der Stromkollektor an der Kathode einer starken Korrosion ausgesetzt.

Um dem Korrosionsangriff standzuhalten, werden der Stromkollektor und die sonstigen Bauteile, die sich im Kathodenhalbraum befinden, aus einem hochlegierten Edelstahl hergestellt, der mindestens 16 Gew.-% Chrom enthält. Trotzdem bilden sich an diesen Bauteilen Oxidschichten. Diese sind zwar elektrisch meist gut leitend, führen jedoch zu einem Verlust an Elektrolyt. Denn zum einen reagiert das Eisen-, Chrom- oder sonstige Metalloxid der Oxidschicht mit den Lithium-Ionen des Elektrolyten unter Bildung von Lithiumferrt, -chromit und dgl., zum anderen wird aus den Kalium oder Natrium-Ionen des Elektrolyten und dem Chromoxid der Oxidschicht Kalium- bzw. Natriumchromat gebildet. Dieser Elektrolytverlust hat eine Degration der Zelle und damit einen Abfall der Zelleistung zur Folge.

Aufgabe der Erfindung ist es daher, einen Elektrolytverlust durch die Bildung von Oxidschichten im Kathodenhalbraum einer Schmelzcarbonatbrennstoffzelle zu verhindern, ohne die elektrische Leitfähigkeit der Oxidschicht zu beeinträchtigen.

Dies wird erfindungsgemäß mit dem im Anspruch 1 gekennzeichneten Stromkollektor erreicht. In den Ansprüchen 2 bis 8 sind vorteilhafte Ausgestaltungen des erfindungsgemäßen Stromkollektors wiedergegeben. Der Anspruch 9 betrifft ein bevorzugtes Verfahren zur Herstellung des erfindungsgemäßen Stromkollektors, das durch die Merkmale der Ansprüche 10 bis 12 in vorteilhafter Weise ausgestaltet werden kann.

Der gewellte Stromkollektor bildet die größte Fläche im Kathodenhalbraum, die einer Korrosion unterliegt und damit zu einem entsprechend großen Elektrolytverlust führen kann. Demgemäß wird erfindungsgemäß der Kathodenstromkollektor zumindest an einer Seite mit einer Aluminiumbeschichtung versehen, d.h. einer Schicht aus Aluminium oder einer aluminiumhaltigen Legierung.

Die Aluminiumbeschichtung führt zu einem wirksamen Korrosionsschutz für das darunterliegende Edelstahlblech. Die Bildung einer stetig wachsenden Oxidschicht an der Edelstahlblechoberfläche, die einen hohen Elektrolytverlust zur Folge hat, ist damit in dem aluminiumbeschichteten Bereich verhindert.

Der Korrosionsschutz wird durch eine dünne Aluminiumoxidschicht bewirkt, die sich an der Oberfläche der Aluminiumschicht bildet. Zwar reagiert auch diese Aluminiumoxidschicht mit dem Lithium aus dem Elektrolyten. Da die Dicke der Aluminiumoxidschicht jedoch weniger als 1 µm beträgt, ist dieser Elektrolytverlust vollig zu vernachlässigen.

Es hat sich herausgestellt, dass nach der Beschichtung des Kathodenstromkollektorblechs mit Aluminium bzw. einer aluminiumhaltigen Legierung keine weiteren Verfahrensschritte notwendig sind, da die Betriebstemperatur der Schmelzcarbonatbrennstoffzelle von 500 bis 700°C die schützende Aluminiumoxidschicht innerhalb der ersten Betriebsstunden ausbildet. Damit ist ein perfekter Korrosionsschutz von Beginn an vorhanden.

Statt aus Aluminium oder einer Aluminiumlegierung kann die Beschichtung des Kathodenstromkollektorblechs erfindungsgemäß auch aus einer aluminiumhaltigen Legierung bestehen, insbesondere aus aluminiumhaltigem Edelstahl. Der Aluminium-Gehalt einer solchen Legierung sollte mindestens 3 Gew.-% betragen. Der Edelstahl enthält vorzugsweise Chrom, und zwar mindestens 8 Gew.-% Cr. Als geeignet hat sich insbesondere ein Edelstahl vom Typ PM 2000 erwiesen, der folgende Zusammensetzung in Gew. % aufweist:
19 Cr, 5,5 Al, 0,5 Ti, 0,5 Y₂O₃, Rest Fe.

Aluminiumoxid weist einen hohen elektrischen Widerstand auf. Demgemäß muß verhindert werden, dass sich an den stromleitenden Kontaktflächen des Kathodenstromkollektors eine Aluminiumoxidschicht ausbildet.

Dies wird dadurch erreicht, dass die Aluminiumbeschichtung des Kathodenstromkollektors an den stromleitenden Kontaktflächen weggelassen wird. Eine Kontaktfläche, die, wenn sie mit einer Aluminiumbeschichtung versehen wäre, in jedem Falle zu einer Aluminiumoxidschicht führen würde, ist die Kontaktfläche zwischen der Kathode und dem Stromkollektor bzw. zwischen dem die Kathode stützenden Lochblech und dem Stromkollektor, da diese Kontaktfläche durch die Porosität der Kathode bzw. des Stützblechs in jedem Fall Sauerstoff ausgesetzt ist. Erfindungsgemäß ist daher die Aluminiumbeschichtung an dieser Kontaktfläche des Stromkollektors ausgespart.

Demgegenüber wird der gewellte Kathodenstromkollektor bei der besagten ersten Variante der Brennstoffzelle auf seiner anderen Seite gegen die Separatorplatte gedrückt. Die Kontaktfläche zwischen dem Stromkollektor und der Separatorplatte kann daher einem solchen Sauerstoffangriff nicht ausgesetzt und deshalb mit einer Aluminiumschicht bedeckt sein. Das heißt, die der Separatorplatte zugewandte Seite des Kathodenstromkollektors kann mit einer geschlossenen Aluminiumschicht versehen sein. Damit die Aluminiumschicht an den Kontaktstellen direkt an der Separatorplatte anliegt, kann sie in diesem Bereich durch eine entsprechend plane Form des Kathodenstromkollektors oder z.B. durch Abschleifen plan ausgebildet sein.

Da das Aluminium der Aluminiumschicht an der Kontaktfläche zwischen dem Kathodenstromkollektor und dem Separatorblech unter den Betriebsbedingungen der Brennstoffzelle in den Kathodenstromkollektor und das Separatorblech diffundiert, kann sich eine intermetallische Kontaktfläche ausbilden, so dass ein Sauerstoffangriff an dieser Kontaktfläche auszuschließen ist. Um eine Oxidation der Aluminiumschicht an der Kontaktstelle zwischen dem Kathodenstromkollektor und der Separatorplatte zu verhindern, kann zudem eine andere intermetallische Verbindung, z.B. eine Lötverbindung zwischen dem Kathodenstromkollektor und der Separatorplatte vorgesehen sein.

Alternativ kann auch hier das Aluminium, z.B. durch Schleifen, entfernt werden.

Um den Elektrolytverlust soweit wie möglich zu verhindern, ist der Kathodenstromkollektor vorzugsweise auf beiden Seiten mit einer Aluminiumbeschichtung versehen, wobei zumindest an den Kontaktflächen des Kathodenstromkollektors mit der Kathode bzw. dem erwähnten gasdurchlässigen Stützblech für die Kathode die Aluminiumbeschichtung weggelassen ist, während die Aluminiumbeschichtung auf der der Separatorplatte zugewandten Seite des Kathodenstromkollektors an den Kontaktstellen mit der Separatorplatte weggelassen sein kann, aber, wie vorstehend ausgeführt, nicht sein muß.

Wenn der Kathodenstromkollektor auf der Kathode bzw. auf dem erwähnten Loch- oder Stützblech an der Kathode flächig aufliegt, kann die Fläche des Kathodenstromkollektorblechs auf dieser Seite, welche die Kathode bzw. das Stützblech nicht berührt und damit durch die Aluminiumoxidschicht an sich vor Oxidation schützbar ist, relativ klein sein. In einem solchen Fall kann es zweckmäßig sein, die der Kathode zugewandte Seite des Kathodenstromkollektorblechs überhaupt nicht mit Aluminium zu beschichten, da eine Beschichtung mit Aluminium auf dieser Seite nur zu einer geringfügigen Herabsetzung des Elektrolytverlustes führen würde.

Da die Aluminiumbeschichtung des Kathodenstromkollektorblechs zumindest an der Kontaktfläche mit der Kathode fehlt, kann das Edelstahlblech von dieser Kontaktfläche aus nach innen korrodieren.

Um diese Korrosion zu verhindern, wird von vornherein ein korrosionsresistentes Edelstahlblech verwendet. Dazu kann ein Edelstahlblech mit einem Chromgehalt von mindestens 5 Gew.-%, insbesondere mindestens 10 Gew.-% verwendet werden.

Allerdings sollte der Chromgehalt des Edelstahls nicht mehr als 17 Gew.-%, vorzugsweise nicht mehr als 15 Gew.-% betra- gen, da sonst ein zu hoher elektrischer Widerstand an der Kontaktfläche auftritt. Dies dürfte darauf zurückzuführen sein, dass Chromoxid gegenüber den anderen aus dem Edelstahl gebildeten Oxiden, insbesondere Eisenoxid einen großen spezifischen elektrischen Widerstand aufweist.

Aus dem gleichen Grunde sollte der Edelstahl möglichst kein Aluminium enthalten, aber auch kein Yttrium, Titan oder Cer, da diese Metalle zu Oxiden mit einem extrem hohen elektrischen Widerstand führen. Vorzugsweise beträgt daher der Gehalt des Edelstahls an Aluminium, Yttrium, Titan und/oder Cer höchstens 0,2 Gew.-%, insbesondere höchstens 0,05 Gew.-%.

Weiterhin hat sich ein Cobaltgehalt des Edelstahls von 3 bis 15 Gew.-%, insbesondere 5 bis 10 Gew.-% als vorteilhaft erwiesen. Dies dürfte darauf zurückzuführen sein, dass die elektrische Leitfähigkeit des sich an der Kontaktfläche mit der Kathode aus dem Eisenoxid gebildeten Lithiumferrit durch Dotierung mit Cobalt wesentlich erhöht wird.

Zur Herstellung des erfindungsgemäßen Stromkollektors wird ein für den Gasdurchtritt mit entsprechenden Öffnungen versehenes, wellenförmig gebogenes Edelstahlblech verwendet, das mit Aluminium oder einer aluminiumhaltigen Legierung auf einer oder beiden Seiten beschichtet wird.

Die Beschichtung des Edelstahlblechs kann mit irgendeinem Beschichtungsverfahren erfolgen, beispielsweise durch PVD, CVD, galvanische Methoden, Plasmaspritzen, Flammspritzen, insbesondere Hochgeschwindigkeitsflammspritzen oder Plattieren.

Damit an den stromleitenden Kontaktflächen des Stromkollektors keine Aluminiumbeschichtung vorliegt, können diese Flächen beim Beschichten abgedeckt werden. Auch ist es möglich, die Aluminiumbeschichtung an diesen Flächen nach der Beschichtung beispielsweise durch Abschleifen wieder zu entfernen.

Nachstehend ist eine Ausführungsform der Erfindung anhand der beigefügten Zeichnung näher erläutert. Darin zeigen:
- Fig. 1: einen Abschnitt einer Schmelzcarbonat-Brennstoffzelleneinheit in schematischem Querschnitt;
- Fig. 2: einen Abschnitt eines Kathodenstromkollektors im Schnitt in stark vergrößerter Wiedergabe.

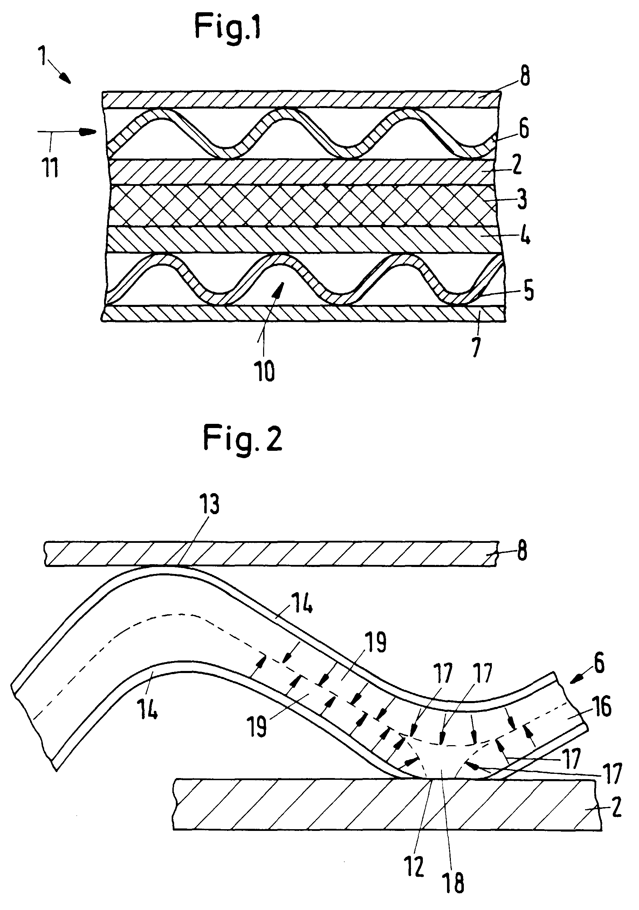

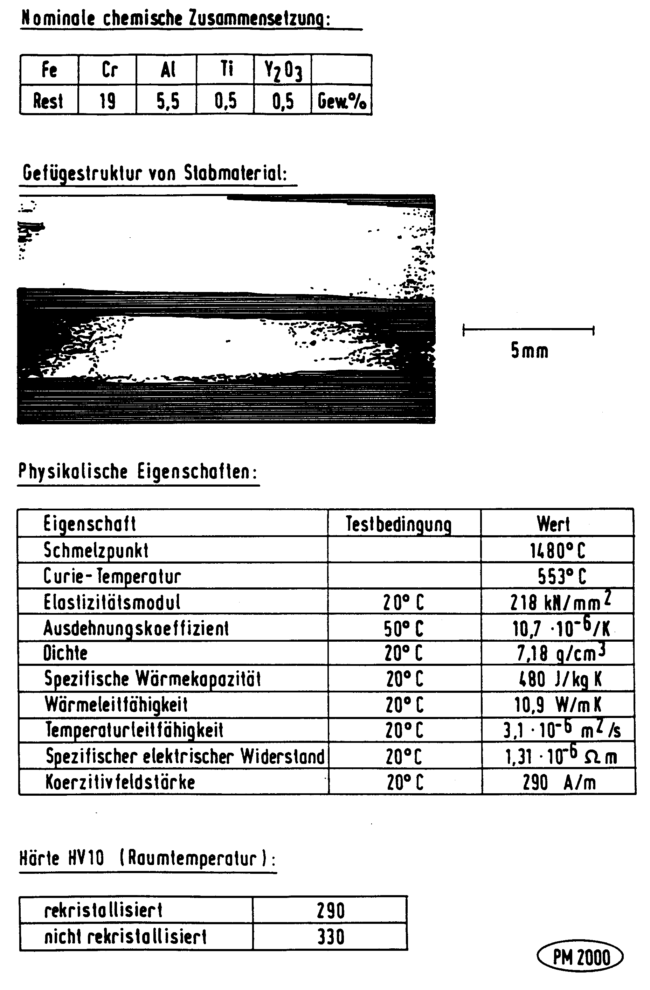

Gemäß Fig. 1 besteht eine Einheit 1 der Schmelzcarbonatbrennstoffzelle aus einer Kathode 2, einer mit einem Schmelzelektrolyten getränkten porösen Matrix 3, einer Anode 4, einem Anodenstromkollektor 5 und einem Kathodenstromkollektor 6. An den Anodenstromkollektor 5 grenzt eine Separatorplatte 7 und an den Kathodenstromkollektor 6 eine Separatorplatte 8 an. Die Kathode 2 besteht z.B. aus einem porösen Metalloxid. Die Anode 4 besteht z.B. aus einer porösen, gesinterten Metallplatte. Durch die gewellten, gasdurchlässigen Anoden- und Kathodenstromkollektoren 5, 6 wird zwischen der Anode 4 und der Separatorplatte 7 bzw. der Kathode 2 und der Separatorplatte 8 ein Gaszufuhrraum zur Zufuhr von Wasserstoff oder eines anderen Brenngases gemäß dem Pfeil 10 bzw. senkrecht dazu zur Zufuhr von Luft oder eines anderen sauerstoffhaltigen Gases gemäß dem Pfeil 11 gebildet.

Der Kathodenstromkollektor 6 leitet den Strom aus der Kathode 2 ab. Er besteht aus Edelstahl.

Gemäß Fig. 2 weist der Kathodenstromkollektor 6 eine Kon- taktfläche 12 an der Kathode 2 und eine Kontaktfläche 13 an der Separatorplatte 8 auf. Mit Ausnahme der Kontaktfläche 12 ist er auf der der Kathode 2 zugewandten Seite mit einer dünnen Aluminiumbeschichtung 14 versehen.

Auf der der Separatorplatte 6 zugewandten Seite weist der Kathodenstromkollektor 6 ebenfalls eine Aluminiumbeschichtung 14 auf, und zwar auch an der Kontaktfläche 13 mit der Separatorplatte 8.

Durch Oxidation der Aluminiumbeschichtung 14 bei in Betriebnahme der Schmelzcarbonatbrennstoffzelle bildet sich durch die Sauerstoffzufuhr gemäß dem Pfeil 11 in Verbindung mit der hohen Temperatur in kürzester Zeit ein geschlossener korrosionsfester Aluminiumoxidfilm aus, der den Kathodenstromkollektor 6, abgesehen von der Kontaktfläche 13, vor einer weiteren Korrosion schützt. Da der Aluminiumoxidfilm eine Dicke von weniger als 1 Mikron aufweist, führt er zu keinem nennenswerten Elektrolytverlust. Ein Elektrolytverlust tritt damit nur an der Kontaktfläche 13 auf, an der das Grundmaterial 16 des Kathodenstromkollektors 6, also das Edelstahlblech korrodiert.

Auf die Gesamtoberfläche des Kathodenstromkollektors 6 bezogen, ist dieser Bereich jedoch derart gering, dass der Elektrolytverlust bei der erfindungsgemäßen Zelle äußerst gering ist.

Da der Kathodenstromkollektor 6 gegen die Separatorplatte 8 gedrückt wird, ist die Kontaktfläche 13 zwischen der Aluminiumschicht 14 und der Separatorplatte 8 gegenüber der sauerstoffhaltigen Umgebung abgedichtet. Damit kann sich an der Kontaktfläche 13 kein Aluminiumoxid ausbilden, das zu einem hohen elektrischen Übergangswiderstand führen würde.

Die Dicke des Grundmaterials, also des Edelstahlblechs 16 des Kathodenstromkollektors 6 kann z.B. 0,1 bis 0,5 mm betragen. Das Aluminium der Schicht 14 diffundiert während des Betriebs der Brennstoffzelle in das Edelstahlblech 16, und zwar auch im Bereich der Kontaktfläche 12, wie durch die Pfeile 17 veranschaulicht.

Im Bereich der Kontaktfläche 12 wird aus dem eindiffundierten Aluminium Aluminiumoxid gebildet, das einen hohen elektrischen Widerstand aufweist. Damit zumindest ein Teil der Kontaktfläche 12 frei von Aluminiumoxid ist, ist die Schichtdicke der Aluminiumbeschichtung 14 so bemessen, dass die Aluminiumdiffusionszone 19 weniger als die Hälfte des Durchmessers der Kontaktfläche 12 des Kathodenstromkollektors an der Kathode 2 beträgt. Damit liegt im Bereich 18 kein Aluminium vor, das durch die an der Kontaktfläche 12 herrschenden oxidierenden Bedingungen zu Aluminiumoxid oxidiert werden würde, das einen sehr hohen elektrischen Widerstand besitzt. Mit anderen Worten, auf dem Stromweg von der Kontaktfläche 12 an der Kathode 2 durch das Edelstahlblech 16 bis zur Separatorplatte 8 liegt kein Aluminiumoxid vor, so dass eine hohe elektrische Leitfähigkeit gewährleistet wird.

## Patentansprüche

1. Stromkollektor aus Edelstahl an den Kathoden einer Schmelzcarbonat-Brennstoffzelle aus gestapelten, durch Separatorplatten voneinander getrennten Brennstoffzelleneinheiten, dadurch gekennzeichnet, dass der Stromkollektor (6) an wenigstens einer Seite mit einer Beschichtung aus Aluminium oder einer aluminiumhaltigen Legierung versehen ist.

2. Stromkollektor nach Anspruch 1, dadurch gekennzeichnet, dass bei einer Beschichtung (14) aus Aluminium oder einer aluminiumhaltigen Legierung auf der der Kathode (2) zugewandten Seite des Stromkollektors (6) die Beschichtung (14) aus Aluminium oder einer aluminiumhaltigen Legierung an den Kontaktflächen (12) des Stromkollektors (6) mit der Kathode (2) weggelassen ist.

3. Stromkollektor nach Anspruch 2, dadurch gekennzeichnet, dass die Schichtdicke der Beschichtung (14) aus Aluminium oder einer aluminiumhaltigen Legierung derart bemessen ist, dass das Aluminium bei Betrieb der Brennstoffzelle um weniger als die Hälfte des Durchmessers der Kontaktfläche (12) in den Stromkollektor (6) diffundiert.

4. Stromkollektor nach einem der Ansprüche 1 bis 3, dadurch gekennzeichnet, dass er zugleich die Separatorplatte zwischen zwei Brennstoffzelleneinheiten bildet.

5. Stromkollektor nach einem der Ansprüche 1 bis 3, dadurch gekennzeichnet, dass er zwischen der Kathode (2) und der Separatorplatte (7) angeordnet ist.

6. Stromkollektor nach einem der vorstehenden Ansprüche, dadurch gekennzeichnet, dass der Edelstahl zwischen 5 und 16 Gew.-% Chrom enthält.

7. Stromkollektor nach einem der vorstehenden Ansprüche, dadurch gekennzeichnet, dass der Edelstahl 3 bis 12 Gew.-% Cobalt enthält.

8. Stromkollektor nach einem der vorstehenden Ansprüche, dadurch gekennzeichnet, dass der Edelstahl höchstens 0,2 Gew.-% Aluminium, Yttrium, Titan und/oder Cer enthält.

9. Verfahren zur Herstellung des Stromkollektors nach einem der vorstehenden Ansprüche, dadurch gekennzeichnet, dass ein mit Öffnungen versehenes und zur Bildung eines Gaszufuhrraumes gebogenes Edelstahlblech an wenigstens einer Seite mit Aluminium oder einer aluminiumhaltigen Legierung beschichtet wird.

10. Verfahren nach Anspruch 9, dadurch gekennzeichnet, dass das Edelstahlblech an den stromleitenden Kontaktflächen des Stromkollektors bei der Beschichtung mit Aluminium oder einer aluminiumhaltigen Legierung abgedeckt wird.

11. Verfahren nach Anspruch 9, dadurch gekennzeichnet, dass die Schicht aus Aluminium oder einer aluminiumhaltigen Legierung nach der Beschichtung des Edelstahlblechs an den stromleitenden Kontaktflächen des Stromkollektors entfernt wird.

12. Verfahren nach Anspruch 9, dadurch gekennzeichnet, dass an der der Separatorplatte zugewandten Seite des Edelstahlblechs eine geschlossene Beschichtung aus Aluminium oder einer aluminiumhaltigen Legierung aufgebracht und die Separatorplatte mit dieser Beschichtung in Kontakt gebracht.
